# EUROPÄISCHE PATENTANMELDUNG

(11) **EP 0 802 042 A2**
(43) Veröffentlichungstag der Anmeldung: **22.10.1997**
(21) Anmeldenummer: 97106447.2
(22) Anmeldetag: 18.04.1997
(51) Int. Cl.: B30B 9/24

(54) **Bandpresse zum Flüssigkeitsentzug**

(30) Priorität: 18.04.1996 DE 29607046 U
(71) Anmelder: Gebr. Bellmer GmbH & Co. KG, D-75223 Niefern-Öschelbronn (DE)
(72) Erfinder: Kollmar, Ulrich, 75181 Pforzheim (DE); Mitschele, Georg, 75181 Pforzheim (DE)
(74) Vertreter: Frank, Gerhard, Dipl.-Phys.

(57) **Zusammenfassung**

Eine Bandpresse zum Flüssigkeitsentzug aus Suspensionen von Faserstoffen und ähnlichem weist am Umfang ihrer ausgangsseitigen Umlenkwalze eine Abschabeeinrichtung (20) auf, von der das Preßgut abgenommen wird, sowie eine Anordnung von zugeordneten parallelen Preßgut-Teilmessern (21), die derart angeordnet oder geneigt sind, daß zwischen ihnen das über die Abschabeeinrichtung (20) abgeführte Preßgut (P) zwangsweise unter Zerkleinerung durchfällt oder durchgeschoben wird.

Die Preßgutteilmesser (21) können hierbei feststehende Klingen sein, oder aber auch feststehende oder rotierende Scheiben, die über die Ebene eines Abnahmeblechs (23) hinausragen.

Damit ist es möglich, die oft noch klumpenähnliche Struktur des mehr oder weniger getrockneten Preßgutes am Ende der Bandpresse aufzubrechen, um insbesondere eine gleichmäßigere Abgabe des Preßgutes und damit eine Erleichterung des Abtransportes beispielsweise auf einem Förderband zu ermöglichen.

## Beschreibung

Die Erfindung betrifft eine Bandpresse zum Flüssigkeitsentzug gemäß dem Oberbegriff des Schutzanspruchs 1.

Derartige Bandpressen sind für vielfältige Aufgaben im Einsatz, immer steht am Ende der Behandlung ein mehr oder weniger getrocknetes Preßgut, das allerdings meist infolge des noch enthaltenen Flüssigkeitsgehaltes kuchenartig zusammengebacken ist oder zusammenhält, wenn es ausgangsseitig zum Abtransport abgegeben wird.

Aufgabe der Erfindung ist es, diese Struktur aufzubrechen, um insbesondere eine gleichmäßigere Abgabe und damit eine Erleichterung des Abtransportes, beispielsweise auf einem Förderband, zu gewährleisten.

Erfindungsgemäß wird diese Aufgabe gemäß dem kennzeichnenden Teil des Schutzanspruchs 1 gelöst.

Während Abschabeinrichtungen, die das entwässerte Preßgut von der ausgangsseitigen Umlenkwalze abnehmen, allgemein bekannt sind, schließt sich erfindungsgemäß an die Oberfläche der Abschabeinrichtung eine Anordnung von Preßgut-Teilmessern an, deren Abstand so gewählt ist, daß er etwa der gewünschten mittleren Abmessung der Preßgutbrocken entspricht, die dann in der Regel auf ein Förderband oder eine andere Fördereinrichtung zum Weitertransport fallen.

Die Preßgut-Teilmesser können hierbei in verschiedenen konstruktiven Varianten ausgebildet sein, es kann sich um feststehende, parallele Klingen handeln, die aus der Oberfläche des Abnahmeblechs geneigt sind, wobei der Neigungswinkel so optimierbar ist, daß die gewünschte Brockengröße zuverlässig erreicht wird, auch bei unterschiedlichen Arbeitsgeschwindigkeiten der Presse oder unterschiedlicher Konsistenz des abgegebenen Preßgutes.

Weitere vorteilhafte Ausgestaltungen sind den Unteransprüchen zu entnehmen.

Ein bevorzugtes Ausführungsbeispiel der erfindungsgemäßen Bandpresse wird nun anhand von Zeichnungen näher erläutert, es zeigen:

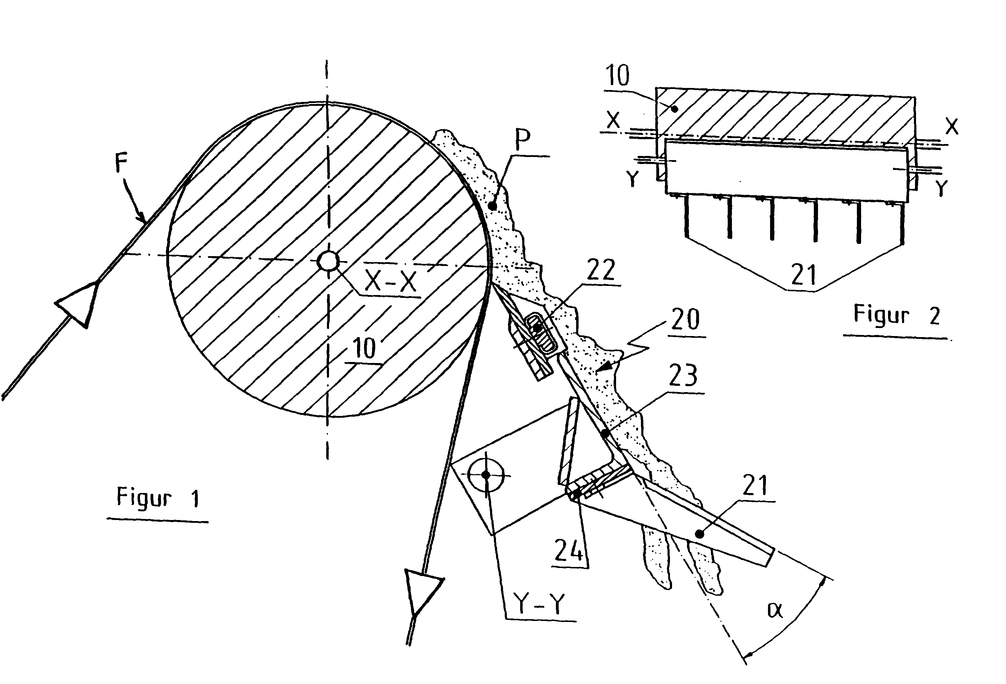

- Fig. 1: einen Querschnitt durch die Abschabeeinrichtung mit der zugeordneten ausqanqsseitiqen Umlenkwalze.
- Fig. 2: eine Frontalansicht von der Abgabeseite auf die Abschabeeinrichtung mit der dahinter liegenden Umlenkwalze,
- Fig. 3: einen Querschnitt gemäß Fig. 1, mit rotierenden Scheiben als Teilmesser.

Die ausgangsseitige Umlenkwalze 10 befördert beim dargestellten Ausführungsbeispiel das Preßgut P auf einem Filterband F. Im Bereich, wo das Preßgut P dazu tendiert, vom Filterband 11 abzufallen, ist ein Schaberbalken 22 mit einer horizontal verlaufenden Klinge an die Umlenkwalze 10 angelegt, an den ein im wesentlichen tangential zur Oberfläche der Umlenkwalze 10 verlaufendes Abnahmeblech 23 anschließt. Beim dargestellten Ausführungsbeispiel weist das Blech an der Abgabeseite einen senkrecht zur Oberfläche verlaufenden Flansch 24 auf, der die Haltefläche für klingenartige Preßgut-Teilmesser 21 bildet, von denen sechs in gleichen Abständen am Ende des Abnahmeblechs 23 gehalten sind. Diese Preßgut-Teilmesser können hierbei beispielsweise geschraubt, gesteckt oder sonst festgehalten werden. Die "Schneidkante" dieser klingenähnlichen Messer ist um einen klinkel α aus der Oberflächenebene des Abnahmeblechs 23 geneigt, so daß das über das Abnahmeblech 23 herabrutschende Preßgut P zwangsläufig die Anordnung der Preßgut-Teilmesser 21 passieren muß, wobei auch bei einer eventuell auftretenden Stauung der Druck des nachfolgenden nachrutschenden Preßgutes dazu führt, daß Brocken, die nur schwer durch die Preßgut-Teilmesser 21 durchgeschoben werden, auf der Klinge nach oben geschoben werden und dort mit entsprechend größerem Druck doch noch in gewünschter Weise zerteilt werden.

Während beim dargestellten Ausführungsbeispiel der klinkel α fest durch die Geometrie des Flansches 24 und der Klingen 21 vorgegeben ist, ist es auch denkbar, diesen Winkel variabel zu gestalten, um in Abhängigkeit von dem "Rutschwinkel" des Preßgutes und/oder dessen Konsistenz wie z.B. dessen Entwässerungsgrad eine Optimierung der gewünschten Zerkleinerung der Preßgutkuchen zu erreichen.

Die gesamte Anordnung aus Abschabeinrichtung 20 und Preßgut-Teilmesser 21 sind Funktionsbestandteil eines gemeinsamen Bauteils, das an einer Schwenkachse Y-Y parallel zur Walzenachse X-X gehalten ist. Damit ist eine gewisse Automatisierung des Anpreßdruckes des Schaberbalkens 22 in Abhängigkeit von den Belastungsverhältnissen aus der gesamten Anordnung gegeben.

Beim dargestellten Ausführungsbeispiel sind die Preßgut-Teilmesser 21 dem Schaberbalken 22 in Förderrichtung nachgeschaltet, es ist jedoch auch möglich, eine Anordnung von Klingen oder Messern 21 zu wählen, die im Bereich des Schaberbalkens oder diesem vorgeschaltet ist, derart, daß eine Zerteilung des Preßgutes P bereits im Umfangsbereich der Umlenkwalze 10 erfolgt. Es sind natürlich auch Kombinationen von mehreren Reihen gleichartiger oder unterschiedlich angeordneter oder unterschiedlich beabstandeter Preßgut-Teilmesser 21 denkbar, beispielsweise um zunächst eine Grobzerteilung mit anschließender feinerer Zerteilung des entwässerten Preßgutes P vornehmen zu können. In allen Fällen muß jedoch gewährleistet sein, daß das zusammenhängende Gefüge des Preßgutes in der gewünschten Weise aufgebrochen wird.

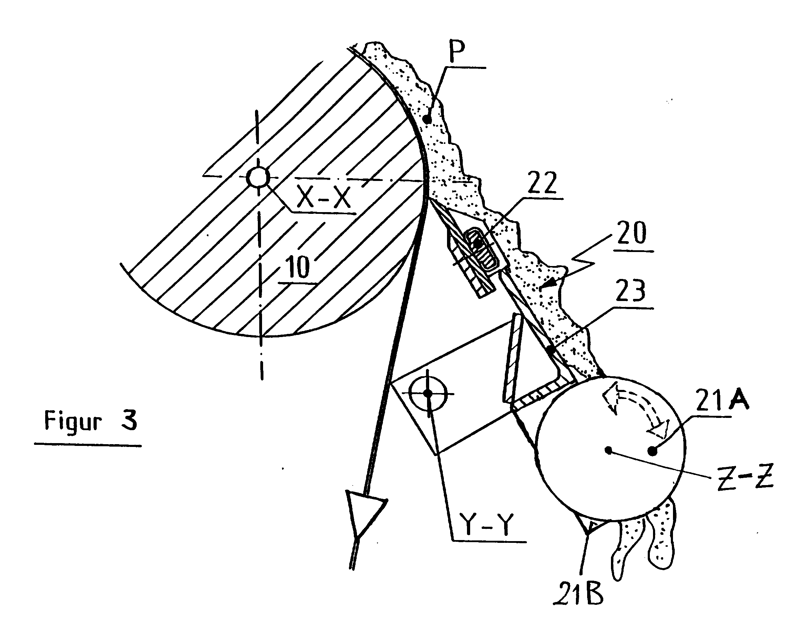

Bei der in Fig. 3 dargestellten Variante sind anstelle feststehender Klingen als Preßgut-Teilmesser rotierende Scheiben 21A vorgesehen, die über einen Motor 21B in Rotation versetzt werden können, was durch den Doppelpfeil symbolisiert sein soll. Hierbei ist die Rotationsachse Z-Z der parallel voneinander gehaltenen Scheiben 21A so gewählt, daß ein wirksamer Eingriff der rotierenden Schneiden in das Preßgut P gewährleistet ist.

## Patentansprüche

1. Bandpresse zum Flüssigkeitsentzug aus Suspensionen von Faserstoffen, Schlämmen, Obstmaischen oder ähnlichem Preßgut, das im wesentlicher gleichförmig auf einem Filterband oder zwischen zwei Filterbändern verteilt über mindestens eine Preßwalze entwässert und schließlich über eine ausgangsseitige Umlenkwalze des Filterbandes abgegeben wird, gekennzeichnet durch eine am Umfang der Umlenkwalze (10) angreifende Abschabeinrichtung (20), von der das Preßgut abgenommen wird, und eine Anordnung von zugeordneten parallelen Preßgut-Teilmessern (21), die derart angeordnet oder geneigt sind, daß das über die Abschabeinrichtung (20) abgeführte Preßgut (P) zwangsweise zwischen den Preßgut-Teilmessern (21) unter Zerkleinerung durchfällt oder durchgeschoben wird.

2. Bandpresse nach Anspruch 1, dadurch gekennzeichnet, daß Abschabeinrichtung (20) und Preßgut-Teilmesser (21) Funktionsbestandteile eines gemeinsamen Bauteils sind.

3. Bandpresse nach Anspruch 2, dadurch gekennzeichnet, daß die Abschabeinrichtung (20) aus einem parallel zur Umlenkwalze (10) gehaltenen Schaberbalken (22) gebildet ist, mit einem im wesentlichen tangential zur Oberfläche der Umlenkwalze (10) verlaufenden Abnahmeblech (23), an das die Preßgut-Teilmesser (21) stromabwärts anschließen.

4. Bandpresse nach Anspruch 3, dadurch gekennzeichnet, daß die Preßgut-Teilmesser (21) gegenüber der Ebene des Abnahmeblechs (23) um einen Winkel (α) nach oben geneigt und gabelähnlich angeordnet sind.

5. Bandpresse nach Anspruch 4, dadurch gekennzeichnet, daß das Abnahmeblech (23) stromabwärts einen nach unten zeigenden Flansch (24) besitzt, an dem die Preßgut-Teilmesser (21) fest oder lösbar gehalten sind.

6. Bandpresse nach Anspruch 2, dadurch gekennzeichnet, daß das gemeinsame Bauteil um eine parallel zur Achse (X-X) der Umlenkwalze (10) verlaufende Schwenkachse (Y-Y) schwenkbar gehalten ist.

7. Bandpresse nach Anspruch 1, dadurch gekennzeichnet, daß die Preßgut-Teilmesser (21) als feststehende Klingen ausgebildet sind.

8. Bandpresse nach Anspruch 1, dadurch gekennzeichnet, daß die Preßgut-Teilmesser (21) rotierende, insbesondere angetriebene Scheiben (21A) sind, die über die Ebene des Abnahmeblechs (23) hinausragen.
